# EUROPEAN PATENT APPLICATION

(11) **EP 4 327 927 A1**
(43) Date of publication of application: **28.02.2024**
(21) Application number: 22191718.0
(22) Date of filing: 23.08.2022
(51) Int. Cl.: B01J 6/00, B01J 4/00, C04B 2/00

(54) **METHOD AND REACTOR FOR THERMAL TREATMENT OF BATTERY PRECURSOR MATERIAL**

(71) Applicant: IBU-tec advanced materials AG, 99425 Weimar (DE)
(72) Inventor: RENSCH, Toralf, 99425 Weimar (DE); WEITZ, Ulrich, 99425 Weimar (DE); SCHWARZ, Stefan, 99423 Weimar (DE); KLAUS, Christian, 07743 Jena (DE); OMMER, Matthias, 07749 Jena (DE); SCHLOSSER, Arndt, 84533 Stammham (DE)
(74) Representative: Liedtke & Partner Patentanwälte

(57) **Abstract**

The invention relates to a method for thermal treatment of a battery precursor material (BPM) in a hot gas stream (HGS) of a reactor (1) having a hot gas generator (13) and a drying chamber (4), which is downstream of the hot gas generator (13), the method comprising the steps:
- feeding the battery precursor material (BPM) over at least one feed location (5, 6) into the reactor (1) into at least one treatment zone (9) of the hot gas stream (HGS) of the thermal reactor (1),
- thermally drying the battery precursor material (BPM) carried in the hot gas stream (HGS) at a temperature of about 50°C to about 900°C with a residence time of about 0.1 s to about 20 s.

## Description

### Field of the Invention

The invention relates to a method and a reactor for thermal treatment of a battery precursor material.

### Technical Background of the Invention

Devices for thermal treatment of a raw material are, for example, pulsation reactors as described in WO 02/072471 A1 or DE 10 2004 044 266 A1 and WO 2019/197147 A1.

Pulsation reactors serve, for example, a thermal synthesis of a raw material for the production of finely divided particles, in particular finely divided materials.

### Brief Description of the Invention

The object of the invention is to provide a particularly environmentally friendly method for a thermal treatment of a battery precursor material, with the help of which good product qualities can be consistently produced. Further, the object of the invention is to provide a reactor for a thermal treatment of a battery precursor material.

According to the method, the object is solved by the features of claim 1. According to the reactor, the object is solved by the features of claim 16.

Advantageous embodiments of the invention are the subject of the sub-claims.

The object is solved according to the invention by a method for thermal treatment, in particular by drying and calcination, of a precursor material in a hot gas stream of a reactor having a hot gas generator and a drying chamber, which is downstream of the hot gas generator, the method comprising at least the steps of feeding the battery precursor material over at least one feed location into the hot gas generator or the drying chamber into at least one treatment zone of the hot gas stream of the reactor and thermally treating the battery precursor material carried in the hot gas stream at a process temperature of about 50°C to about 900°C, in particular below 400°C, preferably to about 350°C, with a residence time of about 0.1 s to about 20 s.

The feeding step of the battery precursor material may be carried out in different ways to provide the thermal treating below a process temperature between 50°C to 900°C, in particular below 400°C:
According to a first example, if feeding of the battery precursor material at the feed location of the hot gas generator carrying out by an initial temperature above 400°C, for example 900°C, then a supplied material flow is controlled in such a way that the process temperature of the hot gas stream in the treatment zone and/or an exhaust gas temperature of the flame of the burner is below 400°C. In particular, the supplied material flow may be controlled by the process temperature and/or the exhaust gas temperature. If the initial temperature is above 400°C then a quantity of the material flow to be fed is controlled to be so large that it cools the exhaust gas of the flame of the burner or the hot gas stream of the hot gas generator and thus the process temperature of the hot gas stream to below 400°C. For example, as battery precursor material a moist starting material is being fed and drops the process temperature of the hot gas stream to below 400°C, preferably to below 350°C.

According to a second example, feeding of the battery precursor material at the feed location of the combustion chamber or hot gas generator may be carrying out by an initial temperature below 400°C in such a way that initially an additional cooling flow may be supplied to the combustion chamber or the hot gas generator and cools the process temperature of the hot gas stream to below 400°C, preferably to below 350°C. Subsequently, the battery precursor material will be fed at the feed location and treated by the set process temperature below 400°C, preferably below 350°C.

According to a third example, feeding of the battery precursor material may be carrying out into the drying chamber, whereby the process temperature has already been set to below 400°C, preferably to below 350°C. This third embodiment is thermodynamically identical to the second embodiment, except that here the flame in the combustion chamber or the hot gas stream in the hot gas generator is spatially separated from the material feeding in the drying chamber.

Under battery precursor material is understood precursor materials comprising for example a selection of substances as active materials, active masses or active liquids of elements or alloys based on alkali metals or metals containing for example at least one source of the elements lithium, sodium, potassium, magnesium and iron and/or non-metals containing for example at least one source of the elements phosphorus and carbon for inserting or intercalating light metals, e.g. active metallic component for rechargeable lithium battery, for example battery electrode material, in particular battery cathode material, e.g. lithium carbonate material or lithium hydroxide material.

The thermal treatment is in particular a process in which, by means of the hot gas stream, the battery precursor material is being dried and/or calcined. In this process, a sufficiently high energy input is achieved within a short residence time of less than 20 s due to the finely distributed direct treatment in the hot gas stream. By reducing the amount of liquid in the battery precursor material within the short residence time and at appropriate process temperatures of less than 400°C, in particular about 50°C to about 400°C, especially in the low range, sintering can be prevented.

Drying and calcining is understood to mean, in particular, drying and calcining of the liquid substance, in particular the solution, slurry, suspension, or a solid but moist starting material. In this case, the thermal treatment takes place in a flowing hot gas (hot gas stream), which causes drying and calcination of the battery precursor material. Surprisingly, it was found that due to the low treatment temperature in combination with the low residence time as a result of the achieved drying, in particular drying-in and calcination in the thermal reactor, very finely divided particles with the correct stoichiometry for the obtained battery precursor material in powder form and with a very low residual moisture are obtained in a single step.

A single step is understood to mean in particular a continuous thermal treatment of the battery precursor material in the hot gas stream of the thermal reactor, namely from the introduction of the battery precursor material, in particular by extremely fine distribution, into the hot gas stream of the reactor and thermal treatment of this battery precursor material by drying, in particular drying-in, and calcination in the hot gas stream of the reactor with short residence times of 0.1 s to 20 s in combination with low process temperatures of 50°C to 900°C, for example below 400°C, preferably about 350°C or between 150°C and 350°C, until the dried and calcined battery precursor material is discharged from the reactor.

In this regard, in a first possible embodiment example, in the case of a starting compound introduced as the battery precursor material, the drying and calcination of the battery precursor material may be performed in a single step in the hot gas stream in the thermal reactor with short residence times of 0.1 s to 20 s in combination with low process temperatures of 50°C to 900°C until the dried and calcined battery precursor material is discharged from the thermal reactor. Additionally, to the above third example, or subsequently, the dried battery precursor material can be fed into a subsequent pyrolysis reactor for synthesing and pyrolysing of the dried battery precursor material, for example, by higher temperature.

The process differs significantly from the process known in the prior art by the energy transfer and the conversion process by drying and calcination by extremely fine distribution of the starting compound in the hot gas and its thermal treatment in the hot gas stream with very short residence time of about 0.1 s to 20 s in combination with very low process temperatures of lower than 400°C, which allows to produce surprisingly very fine particles.

The advantages achieved with the invention are, in particular, that the battery precursor material is cleaned and/or thermally treated, in particular dried and calcined, quickly, easily and in only one stage in an environmentally friendly manner compared to conventional processes. Furthermore, a higher yield as well as special properties (such as adjustment of the crystallite size, in particular homogeneous particle and/or crystallite size distribution, crystal annealing) are achieved for the thermally treated battery precursor material. Preferably, material leakage into an environment is avoided. Expensive pre-drying, intermediate steps, purification, and thermal pretreatments, such as long-lasting calcinations, are avoided.

The battery precursor material is for example fed over at least one feed location into the combustion chamber or the hot gas generator and optionally into the drying chamber.

For homogenous properties of the produced battery precursor material, the temperature of the hot gas stream following addition of the battery precursor material is less than 400°C.

In one possible embodiment of generating the hot gas stream, a combustion gas and a fuel are fed into the reactor, in particular via the burner into the combustion chamber, where they are ignited. As a result, a hot gas stream is generated in which the battery precursor material is fed over at least one feed location into the reactor, for example at least into the combustion chamber and optionally into the drying chamber and is carried and transported by the hot gas stream into and through the drying chamber. The hot gas stream is formed by hot gases produced during combustion in the combustion chamber. In this process, the combustion of fuel and combustion gases can be flameless or with a flame. A pulsating hot gas stream, in particular a regularly or irregularly pulsating hot gas stream, or a uniformly turbulent hot gas stream can be generated as the hot gas stream.

Alternatively, the hot gas stream may be generated by the hot gas generator. The hot gas generator may be configured for example as a pump or pulse mechanism in combination with an electric heater or heat exchanger to generate the hot gas stream, in particular the pulsating hot gas stream.

In a possible embodiment, a regularly or irregularly pulsating or oscillating hot gas stream is generated by adjustment of amplitude and frequency. In particular, a regularly or irregularly pulsation or oscillating hot gas stream is generating by imprinting of a pulsation of a frequency about 80 Hz and pressure amplitudes about 5 mbar to about 100 mbar.

In one possible embodiment, the adjustment of amplitude and/or frequency is performed by means of a generator and/or a pulsator. For example, the frequency and the amplitude may be adjusted independently of each other, or vice versa. For example, the generator is arranged to adjust frequency and amplitude independently of each other. For example, the pulsator is arranged to adjust frequency and amplitude independently. For another example, the generator, in particular the burner, is arranged to adjust frequency and the pulsator is arranged to adjust amplitude independently of each other.

In one possible embodiment, the generator is the burner for adjustable heating of the hot gas stream followed by the combustion chamber.

In one possible embodiment, combustion gases and at least one fuel are introduced via a feed, either together or separately, into the generator and via the generator into the combustion chamber, and ignited in the combustion chamber, with a resulting flame pulsating and producing the pulsating hot gas stream in the combustion chamber. The ignition can be adjusted by means of the generator or burner. For example, by adjusting an ignition timing and/or or combustion air ratio, a pulsating hot gas stream is generated in the combustion chamber as a result of an adjustable flame speed and/or specific fluid mechanics. As a result, the pulsation of the hot gas stream is variable, in particular adjustable.

Furthermore, parameters of the hot gas stream, such as amplitude and/or frequency of the oscillation, may be particularly easy adjusted by means of the generator and/or pulsator or the hot gas generator. In addition, this can be done via the combustion parameters, such as fuel quantity, air quantity, air temperature, fuel temperature and/or flame temperature, location of the fuel/air feed and/or via proportions and/or changes of these from the combustion chamber, in particular combustion chamber, generator, in particular burner and/or drying chamber, and/or temperature and/or quantity mass flow of the pump and/or the electric heater of the hot gas generator.

In one possible embodiment, an additional pulsator can be arranged on the drying chamber. In one possible embodiment, the pulsator is externally coupled to the drying chamber and imprints at least one pressure oscillation to generate or amplify a pulsating or oscillating hot gas stream into the drying chamber.

According to a possible embodiment of the invention, the drying chamber is formed as a resonance tube. For example, the resonance tube comprises a circular cross-section, which in particular enables uniform atomization of the battery precursor material to be fed in the hot gas stream and particularly uniform temperature distribution over the cross-section. In particular, the drying chamber designed as a resonance tube has a smaller diameter than the combustion chamber. For example, the combustion chamber, and the drying chamber are hollow-cylindrical in shape. When certain geometries of the application space, in particular the combustion chamber, and the drying chamber, in particular the resonance tube, are selected, the pulsation of the hot gas stream can be enhanced. For example, the resonance tube has a larger spatial volume than a spatial volume of the application space and/or the combustion chamber.

Additionally, the hot gas stream with the dried battery precursor material may be fed into a further pyrolysis chamber, which is located downstream of the drying chamber, where it is thermally treated by synthesis and pyrolysis. Due to the treatment of the battery precursor material in several chambers, a prolonged residence time of the hot gas stream with the battery precursor material in the drying chamber is achieved.

A process temperature in the range from 50°C to 900°C, for example from 150°C to 400°C, in particular below 400°C, is set in the treatment zone of the reactor, in particular configured as a drying reactor. The process temperature in the treatment zone may be adjusted, for example, based on an adjustment of an air/fuel mixture at the inlet of the burner or via heat transfer to a reaction gas. Under process temperature is understood a treating temperature in the treatment zone of the reactor at which the battery precursor material is treated in the reactor.

In a preferred embodiment, the obtained battery precursor material is separated from the hot gas stream at only one separation point. In particular, all solid materials are separated from the hot gas stream at the separation point.

According to the invention, the thermal treatment of the battery precursor material containing in particular sodium, potassium, magnesium or lithium is carried out with a residence time of 0.1 s to 20 s in the reactor. The residence time thereby determines the treatment duration and the desired thermal treatment of the battery precursor material, for example whether it is to be dried only or calcined only or both dried and calcined.

According to another aspect of the invention, the battery precursor material is dried and calcined in the treatment zone in a single step. In other words, the thermal treatment of the battery precursor material as starting compound and drying and/or calcination is carried out in a self-contained system. Such drying and calcination process reduced to a single step is particularly environmentally friendly and saves resources. In particular, drying and calcination are carried out in direct contact with the hot gas stream in a single operation within the reactor, for example configured as a thermal reactor, e.g. as a drying reactor. The amount of heat transferred per unit of material by the direct heat exchange and thus also the length of the drying duration and calcination duration can thereby be controlled, for example, by the combustion, in particular by the supplied amount of combustion gas and/or fuel, and/or the material flow, in particular of the battery precursor material, in the combustion chamber and the drying chamber of the reactor.

Furthermore, when the reactor is configured as a pulsation reactor, the thermal treatment is particularly homogeneous and uniform. However, the reactor can also be designed as an entrained flow reactor or a pipe reactor heating by the hot gas generator.

In a further embodiment, the battery precursor material is introduced into the drying chamber by means of a carrier fluid and/or as an aerosol. For example, the carrier fluid is a gas, in particular ambient air or oxygen, or also an inert gas, such as nitrogen. A feed of the battery precursor material into the reactor can thereby take place in the region of the combustion chamber and/or the drying chamber. The choice of the feed location into the reactor depends on the thermal treatment to be achieved. In particular, the choice of feed location alters the treatment duration and the temperature effect. For example, for drying and calcination of the battery precursor material, this material is fed into the combustion chamber and optionally into the drying chamber. For drying of the battery precursor material, the battery precursor material as raw material is introduced into the reactor, in particular only into the drying chamber, at a rear feed location, as viewed in the direction of flow of the hot gas stream in the reactor.

Furthermore, it may be provided that the, battery precursor material is transferred to a cooling zone of the drying chamber after thermal treatment in the treatment zone and is subsequently discharged from the drying chamber and deposited in powder form.

The battery precursor material is for example fed into the thermal reactor in form of a solution, slurry or suspension. The battery precursor material may be formed by a solution or a suspension of at least one source of the elements lithium, iron, phosphorous and carbon. The lithium source is chosen from the group consisting of lithium hydroxide (LiOH), lithium hydroxide-hydrate (LiOH · H2O), lithium acetate (LiOAc), lithium carbonate (Li2CO3), lithium-phosphates, -phosphites, - hypophosphites, like LiH2PO4, Li2HPO4, Li3PO4, LiH2PO3, Li2HPO3, and/or LiH2PO2, and mixtures thereof.

In a very preferred embodiment, lithium hydroxide (LiOH) and/or lithium hydroxide-hydrate (LiOH · H2O) and/or lithium carbonate (Li2CO3) may be used as lithium sources.

The iron source may be chosen from compounds in which iron is present in the oxidation state +11 and/or +III. In a preferred embodiment this group of compounds consists of iron(III)-nitrate, iron(III)-chloride, iron(II)-sulphate, iron(II)-oxalate, iron(III)-oxalate, iron (II,III)-oxide, iron(III)- oxide, iron (III)-oxide hydroxide, or iron(III)-hydroxide, for example Fe3O4, alpha-Fe2O3, gamma-Fe2O3, alpha-FeOOH, beta-FeOOH, gamma-FeOOH and Fe(OH)3. Preferred are the alpha-, beta- and gamma-modification of iron(III)-oxide hydroxide (FeOOH) and Fe(OH)3.

The phosphorous source may be chosen from a group of compounds in which phosphorous is present in the oxidation stat +III or +V. In a preferred embodiment this group of compounds consists of phosphonic acid H3PO3, orthophosphoric acid H3PO4 and their salts, for example ammonium hydrogenphosphonates like (NH4)H2PO3, (NH4)2HPO3, (NH4)3PO3, lithium hydrogenphosphonates LiH2PO3, Li2HPO3, Li3PO3, iron phosphonates Fe3(PO3)2, FePO3, FePO3 · H2O, ammonium hydrogenphosphates (NH4)H2PO4, (NH4)2HPO4, (NH4)3PO4, lithium hydrogenphosphates LiH2PO4, Li2HPO4, Li3PO4, iron phosphates Fe3(PO4)2 and FePO4, FePO4 · H2O.

The carbon source may be chosen from a group of natural and synthetic monomers, oligomers and polymers with the main components carbon, hydrogen and oxygen. In a preferred embodiment these compounds are chosen from natural polymers including starch, mono-, di- and polysaccharides, namely galactose, glucose, manose, maltose, lactose, saccharose, cellulose and amylopectine and synthetic polymers, including polyethylenglycole, polyethylene terephthalate and polyacrylate.

The lithium-containing battery precursor material is in particular a nickel-, manganese- and/or cobalt-containing lithium material, for example LiMn2O4, LiCoxMn2-xO4 or Li(NiCoMn)O2 (also called NCM for short), a lithium material containing iron phosphate, for example LiFePO4 (also called LFP for short), a nickel and manganese containing lithium material, for example LiNixMn2-xO4 (also called LNMO for short), an iron phosphate and manganese phosphate containing lithium material, for example LiFe1-xMnxPO4 (also abbreviated to LMP), a lithium material containing nickel, cobalt and/or aluminum, for example LiAlO2 or LiNiCoAlO2 (also abbreviated to NCA), a lithium material containing cobalt and oxygen, for example, LiCoO2 (also called LCO for short), or a titanium- and oxygen-containing lithium material, for example, Li4Ti5O12 (also called LTO for short), or a manganese-, iron-phosphate-containing lithium material.

In particular, the sodium-containing battery precursor material is a nickel-, manganese-, titanium-, and iron-containing sodium material or an iron-phosphate-containing sodium material, permanganate-containing sodium material, or a chromium-containing sodium material.

In particular, the nickel-, manganese-, and cobalt-containing lithium material is a lithium precursor material containing portions of nickel, cobalt, and manganese. In this regard, the nickel-, cobalt-, and manganese-containing lithium material may have stoichiometric proportions of nickel, cobalt, and manganese (1:1:1) or nonstoichiometric proportions (5:3:1, 6:2:2, 8:1:1 (nickel-rich)).

The drying, in particular drying-in, and/or calcination of the solution or suspension is being carried out in the presence of the hot gas stream generating by for example a fuel gas or electric heating of a gas stream.

In a possible embodiment, the solution or suspension has a solid content of about 5 to about 50 percent by weight. In a preferred embodiment the solid content is 10 to 35 percent by weight or 20 to 30 percent by weight. The solution or suspension may be fed as a spray with air at a flow of about 3 to about 7 m3/h and a pressure of about 1 to about 5 bar.

The thermal treatment of the battery precursor material is a continuously drying treatment and/or calcination treatment. The drying treatment and/or the calcination treatment take/s place in the treatment zones of the combustion chamber and the drying chamber configured as a resonance tube.

Further treatment of the battery precursor material may take place in a subsequent pyrolysis step carried out in a subsequent pyrolysis reactor, configured as a rotating reactor or inert pulsation reactor. The reactor, for example configured as thermal reactor or drying reactor, may be coupled to the pyrolysis reactor. For example, the battery precursor material dried within and discharged from the reactor is being fed into the subsequent pyrolysis reactor for pyrolysing. The pyrolysis reactor may be configured as rotating reactor or inert pulsation reactor.

Preferably, a water content of the produced, in particular dried and/or calcinated, battery precursor material is adjustable. In particular, the water content may be less than 10 percent.

The particles may be produced in the form of agglomerates with a size between 0.05 micrometers and 30 micrometers. Mainly, the agglomerates of the particles form quasi-spherical entities.

With the process according to the invention, in particular nano- and/or microscale or nano- and/or microcrystalline, battery precursor materials can be thermally treated, in particular dried and/or calcined. Such a thermally treated for example nano- and/or microscale or nano- and/or microcrystalline battery precursor material is particularly suitable for use as a cathode material or anode material.

The produced battery precursor material may in particular be a lithium-containing battery precursor material.

The lithium-containing battery precursor material may be in particular a phosphate-containing lithium material, for example an iron phosphate-containing lithium material, for example LiFePO4 (also called LFP for short).

The invention further provides a reactor, in particular a thermal reactor, for thermal treatment of a battery precursor material.

The reactor comprises at least a burner and a combustion chamber to generate a hot gas stream, a drying chamber, which is downstream of the combustion chamber, a treatment zone configured to be subjected to the hot gas stream, at least one feed location configured to feed the battery precursor material into the hot gas stream at least in the combustion chamber, and means for controlling a temperature of the hot gas stream about 50°C to about 900°C, in particular a process temperature of the hot gas stream about 50°C to about 400°C, preferably to about 350°C and for controlling thermally treating of the battery precursor material carried in the hot gas stream in the reactor with a residence time of about 0.1 s to about 20 s. In this regard, the reactor is adapted to perform the method described above.

The at least one feed location may be configured to feed a carrier fluid carrying the battery precursor material into the reactor. The burner may be configured for adjustable generating and heating of the hot gas stream with a pulsation frequency of about 80 Hz and pressure amplitudes about 4 mbar to about 100 mbar.

Additionally, a pulsator may be arranged at the drying chamber. The pulsator may be externally coupled to the drying chamber and imparts at least one pressure oscillation to generate or amplify a pulse of the pulsating or oscillating hot gas stream into the drying chamber. In particular, the pulsator may be designed as an electromechanical transducer for generating a frequency-variable pressure oscillation.

### Brief Description of the Figures

Examples of embodiments of the invention are explained in more detail below with reference to drawings. Therein show:
- Figure 1: a block diagram of a first embodiment of a reactor for thermal treatment of a battery precursor material,
- Figure 2: a block diagram of a second embodiment of a reactor for thermal treatment of a battery precursor material wherein a pulsator is coupled to the reactor,
- Figure 3: a block diagram of a third embodiment of a reactor in combination with a pulsator for thermal treatment of a battery precursor material,
- Figure 4: a block diagram of a fourth embodiment of a reactor for thermal treatment of a battery precursor material, and
- Figure 5: a photo of an example of morphological particle shapes of particles of final battery precursor material, and
- Figure 6: a photo of another example of morphological particle shapes of particles of final battery precursor material.

### Description of the Preferred Embodiments

Corresponding reference signs are marked with the same reference signs in all figures.

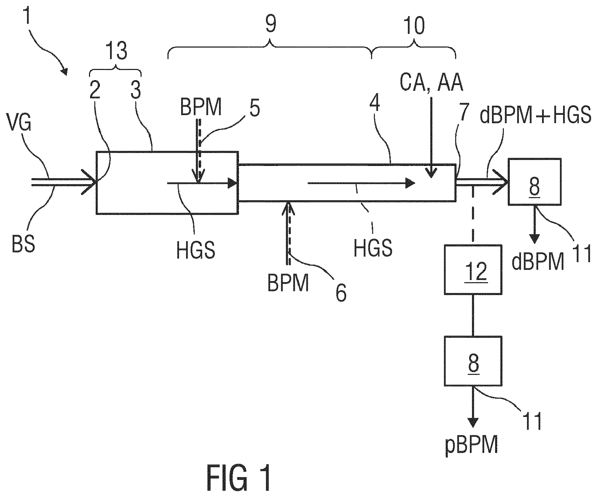

**Figure 1** shows a block diagram of a first embodiment of a reactor 1 for thermal treatment of a battery precursor material BPM.

The battery precursor material BPM is understood to mean in particular one or more initial battery precursor materials, for example a battery precursor material mixture or a battery precursor material suspension or a battery precursor material solution. The battery precursor material BPM is a for example a nano- and/or microscale or nano- and/or microcrystalline, in particular at least a sodium-containing, potassium-containing, magnesium-containing, iron-containing, phosphorus-containing, carbon-containing and/or lithium-containing, battery precursor material BPM.

The battery precursor material BPM may comprise for example a selection of substances as active materials, active masses or active liquids of elements or alloys based on alkali metals or metals containing for example at least one source of the elements lithium, sodium, potassium, magnesium and iron and/or non-metals containing for example at least one source of the elements phosphorus and carbon for inserting or intercalating light metals, e.g. active metallic component for rechargeable lithium battery, for example battery electrode material, in particular battery cathode material, e.g. lithium carbonate material or lithium hydroxide material.

The reactor 1 is designed as a thermal reactor and mentioned further as the thermal reactor 1. The thermal reactor 1 comprises at least a hot gas generator 13, e.g. a burner 2 and a combustion chamber 3, to generate a hot gas stream HGS.

Alternatively, the hot gas generator 13 may be configured as another technical implementation for heating a gas stream, for example electrically, and generating the hot gas stream HGS. In this embodiment the burner 2 is a heating device and the combustion chamber 3 is a heating chamber.

The thermal reactor 1 further comprises a drying chamber 4 which is downstream the hot gas generator 13, in particular the combustion chamber 3 or the heating chamber.

The invention is described below with reference to a hot gas generator 13 based on the burner 2 and the combustion chamber 3. The following description of the invention is also applicable in an analogous manner to an alternative hot gas generator (not shown) comprising, for example, electrical heating and generation of the hot gas steam HGS.

At least one feed location 5 is provided at the combustion chamber 3 for feeding the battery precursor material BPM for thermal treatment in the thermal reactor 1. Optionally, at least one feed location 6 is provided at the drying chamber 4 for feeding the battery precursor material BPM for thermal treatment in the thermal reactor 1.

At least one output point 7 is provided at the drying chamber 4 for dispensing the thermally treated, for example dried and/or calcinated, battery precursor material BPM in powder form from the thermal reactor 1.

In order to separate a final battery precursor material dBPM, in particular thermally treated, for example dried and/or calcinated, as a final product in powder form from the hot gas stream HGS, optionally, a suitable separation device 8 is connected to the drying chamber 4.

In this embodiment, the fed battery precursor material BPM is dried and/or calcinated in a treatment zone 9 of the thermal reactor 1 and is transferred to a cooling zone 10 of the reactor 1, in particular an output region of the drying chamber 4 after thermal treatment in the treatment zone 9 of the reactor 1 and can be then discharged as the final battery precursor material dBPM from the drying chamber 4 and separated in powder form in the separation device 8 and discharged from the separation device 8 at a separation point 11.

For providing the cooling zone 10 at the end of the drying chamber 4, for example, ambient air AA and/or cooled hot gas air CA are fed into the cooling zone 10 and/or into an adjacent end region of the treatment zone 9 before the cooling zone 10.

Optionally, the final battery precursor material dBPM may be further thermal treated in a subsequent pyrolysis step carried out in a subsequent pyrolysis reactor 12. The final battery precursor material dBPM is pyrolised to a final battery material BM within the pyrolysis reactor 12. For separation of the pyrolised final battery material BM, e.g. battery electrode material or battery cathode material, another suitable separation device is connected to the pyrolysis reactor 12. The pyrolysis reactor 12 is for example a rotating reactor or inert pulsation reactor.

At the feed location(s) 5 and/or 6, the battery precursor material BPM is introduced in the form of an output connection or output mixture. In particular, the battery precursor material BPM is charged in the form of a solution, slurry, suspension, or in a solid aggregate state of a battery precursor material mixture.

The thermal reactor 1 may be, for example, an entrained flow reactor, a pulsation reactor, a dryer, a calciner or other suitable equipment or container for thermal treatment of the battery precursor material BPM in the hot gas stream HGS, in particular in a pulsating hot gas stream HGS.

The thermal reactor 1 as an entrained flow reactor or as a pulsed flow reactor is characterized by a thermal treatment of the droplets or particles up to the powder fed as a solution or suspension into a hot flowing gas or a hot flowing and pulsating gas as the hot gas stream HGS, respectively, which carries the particles simultaneously and thus conveys them through the thermal reactor 1, in particular through the combustion chamber 3 and/or through the drying chamber 4, depending on the feed location 5 and/or 6.

In an entrained flow reactor, the battery precursor material BPM is carried by the hot gas stream HGS and passed through the combustion chamber 3 and the drying chamber 4 and thermally treated, in particular dried and/or calcinated, therein.

In the thermal reactor 1, in particular in the treatment zone 9, for example in the combustion chamber 3 and/or in the drying chamber 4, the battery precursor material BPM carried in the hot gas stream HGS is thermally treated at a process temperature of about 50°C to about 900°C, for example below 400°C, preferably about 350°C, with a residence time of 0.1 s to 20 s.

The battery precursor material BPM is treated in the thermal reactor 1 by drying and/or calcination in a single step in the hot gas stream HGS. In this case, a thermal treatment of the battery precursor material BPM by drying and/or calcination takes place in a single step in the hot gas stream HGS in the thermal reactor 1. The final battery precursor material dBPM in powder form obtained in this process may be then discharged from the thermal reactor 1 directly by the separation device 8.

Alternatively, the final battery precursor material dBPM may be fed to the pyrolysis reactor 12 and, subsequently, separated as the final battery material BM, for example battery electrode material, e.g. battery cathode material, by the separation device 8.

Such drying and/or calcination process reduced to a single step for thermal treatment of the battery precursor material BPM is particularly environmentally friendly and saves resources. In this case, drying and calcination is performed in direct contact with the hot gas stream HGS in a single operation within the thermal reactor 1.

The hot gas stream HGS is generated by feeding and igniting a fuel BS and a combustion gas VG via the burner 2 in the thermal reactor 1. The hot gas stream HGS is formed by hot gases produced during combustion of the fuel BS and the combustion gases VG in the combustion chamber 3. In this case, the combustion may be flameless, for example. Also, combustion with a flame is possible. The generated hot gas stream HGS can flow in a regular or irregular pulsating manner in the reactor 1 or flow in a uniform turbulent manner in the reactor 1.

The thermal reactor 1 is described below with reference to a pulsation reactor and is therefore referred to hereinafter as pulsation reactor 1.

In the pulsation reactor 1, the battery precursor material BPM is thermally treated in a pulsating, oscillating hot gas stream HGS.

For this purpose, the pulsation reactor 1 comprises the hot gas generator 13 for generating the pulsating hot gas stream HGS. The hot gas generator 13 is, for example, the burner 2 with the combustion chamber 3 adjoining the burner 2. Alternatively, the hot gas generator 13 may be configured as another technical implementation for heating a gas stream, for example electrically, and generating the hot gas stream HGS. In this embodiment the burner 2 is a heating device and the combustion chamber 3 is a heating chamber.

The feeding of the battery precursor material BPM may be carried out in different ways:
According to a first example, feeding of the battery precursor material BPM at the feed location 5 of the hot gas generator 13 may carry out by an initial temperature above 400°C, e.g. 900°C, whereby a supplied material flow of the battery precursor material BPM is controlled in such a way that the process temperature of the hot gas stream HGS in the treatment zone 9 and/or an exhaust gas temperature of the flame of the burner 2 is below 400°C. In particular, the supplied material flow may be controlled by the process temperature and/or the exhaust gas temperature. If the initial temperature is above 400°C then a quantity of the material flow to be fed is controlled to be so large that it cools the exhaust gas of the flame of the burner 2 or the generated hot gas stream HGS of the hot gas generator 13 and thus the process temperature of the hot gas stream HGS to below 400°C. For example, as battery precursor material BPM a moist starting material is being fed and drops the process temperature of the hot gas stream HGS to below 400°C, preferably to below 350°C.

According to a second example, feeding of the battery precursor material BPM at the feed location 5 of the combustion chamber 3 or hot gas generator 13 may be carrying out by an initial temperature below 400°C in such a way that initially an additional cooling flow may be supplied to the combustion chamber 3 or the hot gas generator 13 and cools the process temperature of the hot gas stream HGS to below 400°C, preferably to below 350°C. Subsequently, the battery precursor material BPM will be fed at the feed location 5 and treated by the set process temperature below 400°C, preferably below 350°C.

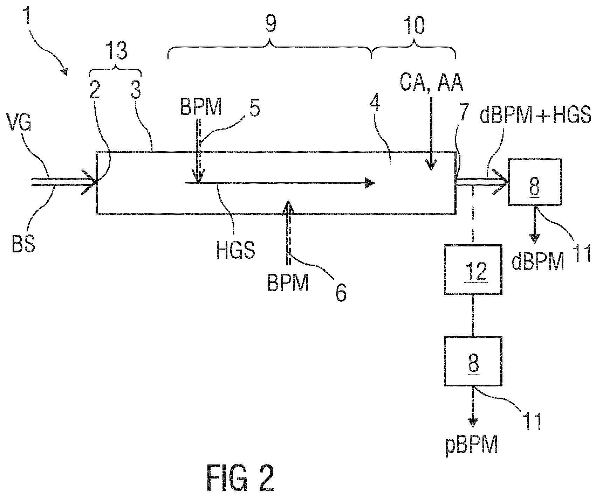

**Figure 2** shows an alternative embodiment of the pulsation reactor 1. This embodiment differs from the previous embodiment only in the design of the chambers 3 and 4 of the reactor 1. The chamber of the hot gas generator 13, e.g. the combustion chamber 3 or the heating chamber (not shown), and the drying chamber 4 of the previous embodiment are designed as one continuous drying chamber 4.

The generating of the hot gas stream HGS takes place in an analogous manner as described above.

The feeding of the battery precursor material BPM differs in that it is fed into the area of the drying chamber 4 as the process temperature is set to below 400°C, preferably to below 350°C. This embodiment according to figure 2 is thermodynamically identical to the first embodiment according to figure 1, except that the flame in the combustion chamber 2 or the hot gas stream in the hot gas generator is spatially separated from the material feeding in the drying chamber 4.

For providing the cooling zone 10 at the end of the drying chamber 4, for example, ambient air AA and/or cooled hot gas air CA are fed into the cooling zone 10.

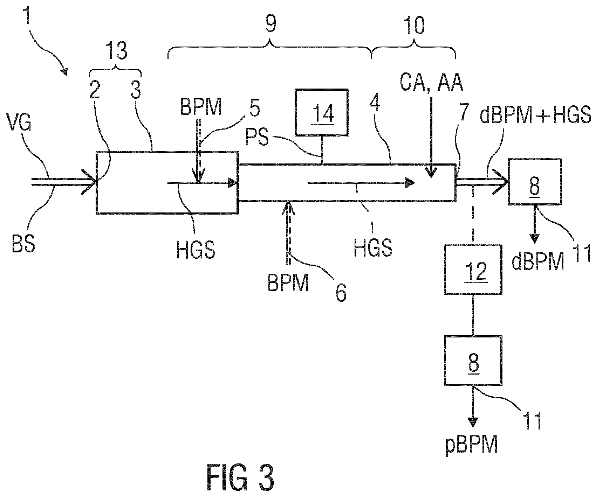

**Figure 3** shows a further embodiment of the pulsation reactor 1 according to figure 1.

Additionally, the pulsation reactor 1 may comprise at least one pulsator 14, which is arranged at the drying chamber 4, which is arranged downstream of the combustion chamber 3. The pulsator 14 can, for example, be coupled to the drying chamber 4 from the outside and imprints at least one pressure oscillation for generating or amplifying the pulsating hot gas stream HGS into the drying chamber 4.

In an alternative or additional embodiment, the hot gas stream HGS can be heated by means of a heat exchanger or electrically heated and generated by means of the pulsator 14 instead of or in addition to the fired generation and heating.

The at least one pulsator 14 imparts or extinguishes at least one (schematically indicated) pressure oscillation PS to the pulsating hot gas stream HGS in the drying chamber 4.

In one possible embodiment, the pulsator 14 is coupled to the drying chamber 4 by means of a pipe device. In this case, the pipe device can project into the drying chamber 4 at least in certain areas.

For example, the pulsator 14 may be designed as an electromechanical transducer for generating the variable-frequency pressure oscillation PS. In this case, the pulsator 14 can be set up to vary the frequency and amplitude of the pressure oscillation PS independently of one another. In particular, the pulsator 14 is configured to increase and decrease the frequency and amplitude of the volume located between, for example, a movable part and a pipe device 14 independently of each other.

In one possible embodiment, the pulsator 14 comprises a membrane (not shown) arranged in a transition region between the pulsator 14 and the drying chamber 4. In this regard, the membrane may be formed as a flexible wall portion of the drying chamber 4 to which a conduit of the pulsator is connected. The membrane is excited to oscillate, for example by means of a cylinder-piston device (not shown). Due to the oscillating movement of the membrane in the wall of the drying chamber 4, a corresponding pressure oscillation PS is imposed on the hot gas stream HGS in the drying chamber 4 as a result of volume change in the drying chamber 4, whereby the pulsation of the hot gas stream HGS is changed.

Alternatively, the pulsator14 may comprise the cylinder-piston device having a flow outlet. The cylinder-piston device comprises at least one cylinder accommodating a working medium, in particular a gas, and having at least one piston. The cylinder has an end face which has the flow outlet in the direction of the drying chamber 4. The piston is moved back and forth in the cylinder so that the working medium is sucked into the cylinder chamber with it via the flow outlet from the drying chamber 4 and expelled again via the flow outlet into the drying chamber 4. The resulting pressure oscillation PS is thus imposed on the hot gas stream HGS in the drying chamber 4. In this case, the frequency and/or the amplitude of the pressure oscillation PS and, by the resulting imprinting of the pressure oscillation PS on the hot gas stream HGS, its pulsation can be changed or adjusted as required via the reciprocating motion of the piston, which is performed and controlled externally by a corresponding drive, for example an electric motor.

The following description of the adjustment of amplitude and/or frequency of the hot gas stream HGS may be used for all above described different embodiments of the reactor 1 according to figures 1 to 3.

The adjustment of amplitude and/or frequency of the hot gas stream HGS may performed by means of the hot gas generator 13 and/or the pulsator 14. For example, the frequency and the amplitude may be adjusted independently of each other, or vice versa. For example, the hot gas generator 13 is arranged to adjust frequency and amplitude independently of each other. Alternatively, the pulsator 14 is arranged to adjust frequency and amplitude independently. For another example, the hot gas generator 13, in particular the burner 2, is arranged to adjust the frequency and the pulsator 14 is arranged to adjust the amplitude independently of each other.

In another alternative embodiment, the pulsator 14 may comprise a closure orifice or a quick-closing valve. In this regard, the closure orifice or the quick-closing valve may be incorporated into a wall of the drying chamber 4. For example, the closure orifice or the quick-closing valve may deflect a wall of the drying chamber 4 configured as a diaphragm by means of overpressure, thereby introducing pulsation into the hot gas stream. Furthermore, the pulsator 14 may comprise an electrodynamic oscillator, also called a shaker, which deflects the membrane.

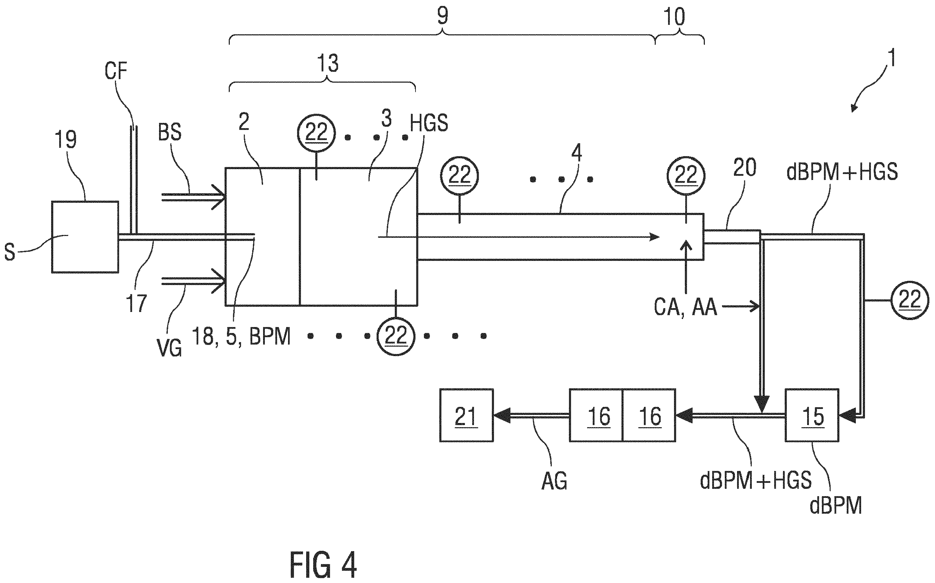

**Figure 4** shows a block diagram of a fourth embodiment of a reactor 1 for thermal treatment of a battery precursor material BPM.

The reactor 1 is configured as a thermal reactor 1. The thermal reactor 1 comprises as the hot gas generator 13 at least the burner 2 and the combustion chamber 3. The drying chamber 4 is downstream of the combustion chamber 3 and configured as a resonance tube. The separation devices 8 is downstream the reactor 1 and configured as a cyclone separator 15 and filter devices 16.

The battery precursor material BPM is fed at the feed location 5 into the combustion chamber 3. For feeding of the battery precursor material BPM, a lance 17 with a nozzle 18 projecting into the combustion chamber 3 is provided in the region of the burner 2.

The battery precursor material BPM is fed as a solution S via the lance 17. The solution S may be for example mixed in a container 19. The container 19 is couplet with the lance 17 for feeding the battery precursor material BPM as a spray into the combustion chamber 3.

The battery precursor material BPM is formed by the suspension S of at least a selection of substances as active materials, active masses or active liquids of elements or alloys based on alkali metals or metals containing for example at least one source of the elements lithium, sodium, potassium, magnesium and iron and/or non-metals containing for example at least one source of the elements phosphorus and carbon for inserting or intercalating light metals, e.g. active metallic component for rechargeable lithium battery, for example battery electrode material, in particular battery cathode material, e.g. lithium carbonate material or lithium hydroxide material.

In particular, deionized water is being filled into the container 19. Subsequently, during a mixing procedure, for example by stirring, at least one source of the elements lithium, iron, phosphorous and carbon may be inserted into the container 19.

The final suspension S of the battery precursor material BPM to be fed has a solid content of about 20 to about 25 percent by weight.

The final suspension S is fed as a spray by the nozzle 18 with air at a flow of about 3 to about 7 m³/h and a pressure of about 1 to about 5 bar.

The at least one feed location 5 is configured to feed a carrier fluid CF carrying the solution S of the battery precursor material BPM into the reactor 1.

The generating of the hot gas stream HGS can be carried differently:
For example, the hot gas stream HGS can be generated by heating and combustion of the fuel BS and combustion air VG with a flame and feeding of the battery precursor material BPM direct into the flame. The medium temperature in the treatment zone 9 is between for example 150°C and 900°C, for example between 150°C and 400°C, preferably about 350°C. The particle size distribution is being decreased with higher medium temperature. The final battery material BM has a low carbon content.

Alternatively, the hot gas stream HGS can be generated by heating and combustion of the fuel BS and combustion air VG with a flame and feeding of the battery precursor material BPM indirectly downstream of the flame. The medium temperature in the treatment zone 9 is between for example 150°C and 400°C, preferably about 350°C. The particle size distribution is being increased with higher medium temperature. The battery precursor material BPM may have a higher carbon content and a lower water content or moisture content as the battery precursor material BPM fed directly into the flame.

Alternatively, the hot gas stream HGS can be generated by electrical heating of a known shown hot gas generator without a flame and feeding of the battery precursor material BPM into the hot gas stream HGS of the reactor 1.

The hot gas stream HGS is preferably generated as a regularly or irregularly pulsating or oscillating hot gas stream HGS by imprinting of a pulsation of a frequency about 80 Hz and pressure amplitudes about 5 mbar to about 100 mbar. The adjustment of the amplitude and/or the frequency is carried out by means of the hot gas generator 13, for example the burner 2 and/or the pulsator 14. The burner 2 may be configured for adjustable generating and heating of the hot gas stream HGS with a pulsation frequency of about 80 Hz and pressure amplitudes about 4 mbar to about 100 mbar. For example, the controller 23 controls the burner 2 accordingly.

Preferably, the controller 23 controls the treatment zone 9 such that the temperature is about 350°C and the hot gas stream HGS has a frequency about 80 Hz and pressure amplitudes about 5 mbar to about 100 mbar. The final dried battery precursor material dBPM has high yield with a residual moisture of lower than to 10 percent per weight and carbon content of 0,0 to 8,5 percent per weight.

The thermal treatment is a continuously drying treatment of the battery precursor material BPM fed in form of for example the solution S:
The drying treatment takes place in the continuous treatment zone 9 of the combustion chamber 3 and the drying chamber 4 which configured as a resonance tube.

The battery precursor material BPM carried in the hot gas stream HGS through the treatment zone 9 at a temperature between 50°C and 900°C, for example between 150°C and 400°C, preferably about 350°C, and with a residence time of 0.1 s to 20 s.

To control the treatment temperature in the treatment zone 9 means for measuring and controlling temperatures of the hot gas stream HGS are provided. For example, a number of temperature sensors 22 are arranged on the combustion chamber 3 and the drying chamber 4. The temperature sensors 22 are connected with a controller 23 to control the burner 2, for example to control feeding of combustion air VG and/or fuel BS and/or suspension S and/or cooling air CA and/or ambient air AA.

Preferably, the controller 23 controls the temperature of the hot gas stream HGS following addition of the battery precursor material BPM such that the temperature is less than 400 °C, preferably less than 350°C.

The controller 23 further controls the residence time of the battery precursor material BPM carried in the hot gas stream HGS in the reactor 1. In particular, the controller 23 controls the frequency and amplitudes of the hot gas stream HGS by controlling combustion air VG and/or fuel BS and/or suspension S as well as nozzle air flow and nozzle air pressure of the nozzle 18 to set a residence time of the battery precursor material BPM within the reactor 1 at a very low residence time between 0.1 s and 20 s.

Particles of the battery precursor material BPM are thermally treated by drying and calcining in the treatment zone 9. The particles of the final dried battery precursor material dBPM will be produced due the thermal treatment in the form of agglomerates with a size between 0.05 micrometers and 30 micrometers. The agglomerates of the particles form quasi-spherical entities.

The final battery precursor material dBPM may be separated via the cyclone separator 15. Final battery precursor material dBPM that is not separated in the cyclone separator 15 can be collected in the subsequent filter devices 16.

For providing the cooling zone 10 at the end of the drying chamber 4, for example, ambient air AA and/or cooled hot gas air CA are fed into an output 20 of the drying chamber 4.

Rest of filtered hot gas stream HGS is discharged as exhaust gas AG via a stack 21.

The following described method for thermal treatment of the battery precursor material BPM relates to all shown embodiments of thermal reactors 1 according to **figures 1 to 4****.**

The, for example pulsating, hot gas stream HGS flows from the combustion chamber 3 into the downstream drying chamber 4 and through the drying chamber 4.

When the burner 2 is used as hot gas generator 13, in detail combustion gases VG and at least one fuel BS are introduced jointly or separately into the burner via a feed and via the latter into the combustion chamber 3.

In particular, a combustible gas, such as natural gas and/or hydrogen, is supplied as fuel BS. Also, another suitable gas can be supplied as fuel BS.

For example, ambient air, oxygen, etc. is used as the combustion gas VG. The supplied combustion gases VG and fuels BS are ignited, for example, in the combustion chamber 3. The resulting flame pulsates due to a self-excited periodic stationary combustion in the combustion chamber 3 and generates the pulsating hot gas stream HGS in the combustion chamber 3. The pulsating hot gas stream HGS flows from the combustion chamber 3 on a flow outlet side into the drying chamber 4.

The drying chamber 4 is configured, for example, as a resonance tube. The drying chamber 4 can optionally be followed by a further drying chamber, in particular by the pyrolysis reactor 12 shown in figure 2. The drying chamber 4 thereby characterizes a region of the pulsation reactor 1 which extends from the end of the combustion chamber 4 to at least the end of the drying chamber 4 designed as a resonance tube.

The battery precursor material BPM is thermally treated in the treatment zone 9 of the combustion chamber 3 and the drying chamber 4.

In detail, the fuel BS and the necessary combustion gas VG are supplied together (for example premixed in an upstream mixing chamber) or separately via the hot gas generator 13, in particular the burner 2, to the combustion chamber 3, in particular the combustion chamber, and ignited there. In the process, the fuel BS and the combustion gas VG burn very rapidly and generate a pressure wave in the direction of the drying chamber 4, for example in the direction of the resonance tube. Due to the lower flow resistance in the direction of the drying chamber 4, the propagation of a pressure wave occurs. During the acoustic oscillation process, the pressure in the combustion chamber 3, in particular in the combustion chamber, is reduced so that new fuel gas mixture or new fuel BS and combustion gas VG can flow in. This process of after-flow due to pressure fluctuations takes place in a self-regulating periodic manner.

In another possible embodiment, a reaction gas, such as air and/or nitrogen and/or forming gas, is fed to a heat exchanger. This heats the reaction gas to the desired temperature and then feeds it to the combustion chamber 3 as a hot gas. By using one or more pulsators 14 at the drying chamber 4, a pulsating hot gas stream HGS is thus also produced.

The pulsating hot gas stream HGS is characterized by a high degree of turbulence. The high flow turbulence and the constantly changing flow velocity prevent the buildup of an insulating gas shell (boundary layer) around the solid particles of the battery precursor material BPM, allowing higher heat transfer and mass transfer (between battery precursor material BPM and hot gas), i.e. faster reaction at comparatively lower temperatures. Typically, the residence time is less than 20 second.

The frequency of the pulsating hot gas stream HGS is in the hertz range, in particular in a range of a few hertz, for example greater than 50 Hz, for example in a range from 50 Hz to 100 Hz, in particular around 80 Hz. Parameters of the hot gas stream HGS, such as amplitude and/or frequency of the oscillation, are particularly easy to adjust by means of the hot gas generator 13 and/or pulsator 14. In addition, this can be done via the combustion parameters, such as fuel quantity, air quantity, air temperature, fuel temperature and/or flame temperature, location of the fuel/air feed and/or via proportions and/or changes of these from the combustion chamber 3, in particular combustion chamber, hot gas generator 13, in particular burner 2 and/or drying chamber 4.

The drying chamber 4 is designed, for example, as a resonance tube. The combustion chamber 3 is designed as a large combustion chamber whose dimensions, in particular its diameter, are larger than the dimensions, in particular the diameter, of the drying chamber 4.

The combustion chamber 3 comprises at least one feed location 5, at which a feed of the battery precursor material BPM takes place. Additionally, at least one feed location 6 is arranged at the drying chamber 4, at which a feed of the battery precursor material BPM takes place.

The choice of the feed location 5 and/or 6 into the pulsation reactor 1 depends on the thermal treatment to be achieved. In particular, the choice of the feed location 5 changes the treatment duration and the temperature effect. For example, for drying and calcination of the battery precursor material BPM, this is introduced into the reactor 1, in particular into the combustion chamber 3, at a front feed location of the reactor 1, as seen in the direction of flow of the hot gas stream HGS in the reactor 1.

For drying the battery precursor material BPM, this is introduced into the reactor 1, in particular only into the drying chamber 4, at a rear feed point of the reactor 1, as seen in the direction of flow of the hot gas stream HGS in the reactor 1.

The battery precursor material BPM is introduced into the pulsation reactor 1 by means of a carrier fluid and/or as an aerosol, for example in diluted form. For example, the carrier fluid is a gas, in particular ambient air, oxygen or nitrogen.

The battery precursor material BPM in the form of a solution, slurry, suspension or in a solid aggregate state is introduced into the pulsation reactor 1 and there thermally treated, in particular dried and/or calcined, in the treatment zone 9 by means of the pulsating hot gas stream HGS at a temperature of 50°C to 400°C. Subsequently, the obtained final battery precursor material dBPM is separated from the pulsation reactor 1 in powder form.

In a preferred embodiment, the obtained final battery precursor material dBPM or the obtained pyrolised final battery material BM each of them is separated from the hot gas stream HGS at the separation point 11 of the respective separation device 8. In particular, all solid materials are separated from the hot gas stream HGS at the separation point 11. The separation device can, for example, be designed as a filter or centrifugal separator.

One embodiment provides that the thermal treatment of the battery precursor material BPM is carried out with a residence time of 0.1 s to 20 s in the pulsation reactor 1. The residence time thereby determines the treatment duration and the desired thermal treatment of the battery precursor material BPM, for example whether it is to be only dried or only calcined or both dried and calcined.

The battery precursor material BPM is in particular a lithium material containing nickel, manganese and/or cobalt, for example LiMn2O4, LiCoxMn2-xO4 or Li(NiCoMn)O2 (also called NCM for short), a lithium material containing iron phosphate, for example LiFePO4 (also called LFP for short), a nickel- and manganese-containing lithium material, for example LiNixMn2-xO4 (also called LNMO for short), an iron- and manganese-containing lithium material, for example LiFe1-xMnxPO4 (also called LMP for short), a nickel-, cobalt- and/or aluminum-containing lithium material, for example LiAlO2 or LiNiCoAlO2 (also called NCA for short), a cobalt- and oxygen-containing lithium material, for example LiCoO2 (also called LCO for short) or a titanium- and oxygen-containing lithium material, for example Li4Ti5O12 (also called LTO for short) or a nickel-, manganese-, titanium- and iron-containing sodium material or a manganese-, iron phosphate-containing lithium material.

The nickel-, manganese- and cobalt-containing lithium material is in particular a lithium starting compound with proportions of nickel, cobalt and manganese. In this context, the nickel-, manganese- and cobalt-containing lithium material may have stoichiometric proportions of nickel, cobalt and manganese (1:1:1) or nonstoichiometric proportions (5:3:1, 6:2:2, 8:1:1 (nickel-rich)). The lithium content is lower in the nickel-, manganese- and cobalt-containing lithium material compared to the nickel, cobalt and manganese contents.

The battery precursor material BPM obtained and deposited has in particular an average particle size in the range from 0.05 micrometers and up to 30 µm.

Using examples of powders based on battery precursor material BPM containing sodium or lithium, it can be shown that, by means of the combination of the inventive measures, particularly finely divided powders can be thermally treated and produced in a single step in the hot gas stream HGS in thermal reactor 1.

### Example - thermal treatment and production of a compound. LiFePO4 (LFP) as an example of a lithium-containing battery precursor material.

A metal phosphate powder with the composition LiFePO4 was prepared as lithium-containing battery precursor material BPM. For this purpose, an aqueous solution of ferric nitrate nonahydrate, lithium hydroxide monohydrate and phosphoric acid in the appropriate stoichiometric ratio and a total product concentration of 15 wt.% (calculated as LiFePO4) was reacted in the hot gas stream HGS in the pulsation reactor 1 to form lithium iron phosphate. The aqueous solution of the battery precursor material BPM was introduced into the combustion chamber 3 by means of a two-substance nozzle and thermally treated in the treatment zone 9 of the pulsation rector 1 at a temperature less than 400°C, in particular less than 350°C upto 150 °C, in particular treated in a single step and thus dried and/or calcined in a single step in the pulsation reactor 1. The product (final battery precursor material dBPM in powder form) was separated from the cooled gas stream by a filter (separation device 8).

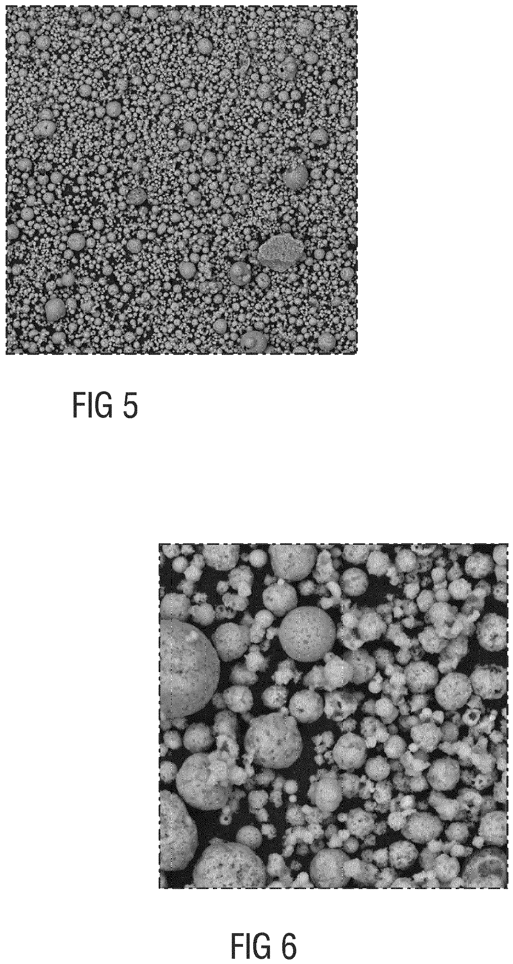

**Figure 5 and 6** show different magnifications (1000x and 5500x magnifications generated by electron microscopy) of the same example of morphological particle shapes of particles of the final battery precursor material dBPM. The particles of the final lithium-containing battery precursor material dBPM have a high degree of homogeneous shape and homogenous size due to the thermal treatment of the lithium-containing battery precursor material BPM within the hot gas stream HGS at the process temperature between 50°C and 900°C, for example between 150°C and 400°C, preferably about or below 350°C with a residence time of about 0.1s to 20 s.

### LIST OF REFERENCE SIGNS

- 1: Reactor, pulsation reactor
- 2: Burner
- 3: Combustion chamber
- 4: Drying chamber
- 5: Feed location
- 6: Feed location
- 7: output point
- 8: separation device
- 9: treatment zone
- 10: cooling zone
- 11: Separation point
- 12: Pyrolysis reactor
- 13: Generator
- 14: Pulsator
- 15: Cyclone separator
- 16: Filter device
- 17: Lance
- 18: Nozzle
- 19: Container
- 20: Output
- 21: Stack
- 22: Temperature sensor
- 23: Controller

- AA: Ambient air
- BPM: Battery precursor material
- dBPM: Final battery precursor material
- BM: Final battery material
- BS: Fuel
- CA: Cooled hot gas air
- CF: Carrier fluid
- HGS: Hot gas stream
- PS: Pressure oscillation
- S: Solution
- VG: Combustion gas

## Claims

1. Method for thermal treatment of a battery precursor material (BPM) in a hot gas stream (HGS) of a reactor (1) having a hot gas generator (13) and a drying chamber (4), which is downstream of the hot gas generator (13), the method comprising the steps:
- feeding the battery precursor material (BPM) over at least one feed location (5, 6) into the reactor (1) into at least one treatment zone (9) of the hot gas stream (HGS) of the thermal reactor (1),
- thermally drying the battery precursor material (BPM) carried in the hot gas stream (HGS) at a process temperature of about 50°C to about 900°C with a residence time of about 0.1 s to about 20 s.

2. Method according to claim 1, wherein the battery precursor material (BPM) is fed over at least one feed location (5, 6) into the hot gas generator (13) and/or the drying chamber (4).

3. Method according to claim 1 or 2, wherein the process temperature of the hot gas stream (HGS) following addition of the battery precursor material (BPM) is less than 400°C.

4. Method according to any one of the preceding claims, wherein a regularly or irregularly pulsating or oscillating hot gas stream (HGS) is generated by imprinting of a pulsation of a frequency about 80 Hz and pressure amplitudes about 5 mbar to about 100 mbar.

5. Method according to claim 4, wherein the adjustment of the amplitude and/or the frequency is carried out by means of the burner (2) and/or a pulsator (14).

6. Method according to any one of the preceding claims, wherein the battery precursor material (BPM) is fed into the thermal reactor (1) in form of a solution, slurry or suspension (S).

7. Method according to any one of the preceding claims, wherein the battery precursor material (BPM) is formed by a suspension (S) of at least one source of the elements lithium, iron, phosphorous and carbon.

8. Method according to claim 6 or 7, wherein the suspension (S) has a solid content of about 5 to about 50 percent by weight.

9. Method according to any one of the preceding claims, wherein the thermal treatment is a continuously drying treatment of the battery precursor material (BPM).

10. Method according to claim 9, wherein the drying treatment takes place in the treatment zone (9) of the combustion chamber (3) and/or the drying chamber (4) configured as a resonance tube.

11. Material according to any one of the preceding claims, wherein particles of the battery precursor material (BPM) are thermally treated by drying and calcining in the reactor (1).

12. Material according to claim 11, wherein the particles are in the form of agglomerates with a size between 0.05 micrometers and 30 micrometers.

13. Material according to claim 12, wherein the agglomerates of the particles form quasi-spherical entities.

14. Method according to any one of the claims 9 to 13, wherein further thermal treatment of a final battery precursor material (dBPM) takes place in a subsequent pyrolysis step carried out in a subsequent pyrolysis reactor (12).

15. Method according to any one of the preceding claims, wherein the method is performed in the reactor (1) used of type pulsation furnace.

16. A reactor (1) for thermal treatment of a battery precursor material (BPM), the reactor (1) comprising at least:
- a hot gas generator (13) to generate a hot gas stream (HGS), and
- a drying chamber (4), which is downstream of the hot gas generator (13),
- a treatment zone (9) configured to be subjected to the hot gas stream (HGS),
- at least one feed location (5, 6) configured to feed the battery precursor material (BPM) into the hot gas stream (HGS) at least in the hot gas generator (13), and
- means for controlling a process temperature of the hot gas stream about 50°C to about 400°C and for controlling thermally treating of the battery precursor material (BPM) carried in the hot gas stream (HGS) in the reactor (1) with a residence time of about 0.1 s to about 20 s.

17. The reactor (1) of claim 16, wherein the at least one feed location (5, 6) is configured to feed a carrier fluid (CF) carrying the battery precursor material (BPM) into the reactor (1).

18. The reactor (1) according to claim 16 or 17, wherein the burner (2) is configured for adjustable generating and heating of the hot gas stream (HGS) with a pulsation frequency of about 80 Hz and pressure amplitudes about 4 mbar to about 100 mbar.

19. The reactor (1) according to any one of the preceding claims 16 to 18, wherein a pulsator (14) is additionally arranged at the drying chamber (4).

20. Use of a thermal reactor (1) according of any one of claims 16 to 19 for carrying out the method according to any one of claims 1 to 15.
